# EUROPEAN PATENT SPECIFICATION

(11) **EP 4 215 400 B1**
(45) Date of publication and mention of the grant of the patent: **12.03.2025**
(21) Application number: 22152716.1
(22) Date of filing: 21.01.2022
(51) Int. Cl.: B60K 35/10, B60K 35/28, B60K 35/85

(54) **METHOD AND APPARATUS FOR INITIATING A FUNCTION OF A VEHICLE**
VERFAHREN UND VORRICHTUNG ZUR AUSLÖSUNG EINER FUNKTION EINES FAHRZEUGS
PROCÉDÉ ET APPAREIL POUR INITIER UNE FONCTION D'UN VÉHICULE

(43) Date of publication of application: 26.07.2023
(73) Proprietor: Bayerische Motoren Werke Aktiengesellschaft, 80809 München (DE)
(72) Inventor: Neff, Albrecht, Sunnyvale, CA 94087 (US); Grein, Daniel, Novato, CA 94947 (US); Mok, Brian, Santa Clara, CA 95050 (US)

(56) References cited:
- WO-A1-2013/074866
- US-A1- 2012 283 894
- US-A1- 2013 261 871

## Description

The invention is directed to a method and an apparatus for initiating a function of a vehicle, and to a computer program for performing the method.

In the field of initiating of functions of vehicles a user can operate control buttons which are arranged in the vehicle. By operating control buttons functions in the car such as air-conditioning, window controls, radio or others can be activated, deactivated or adjusted. Such control buttons can be arranged at a centre console or at a steering wheel. In modern vehicles such control buttons can be displayed at a touchscreen which can be arranged at a centre console of the vehicle. Such control buttons are mainly arranged for use of a driver of the vehicle. In particular, operating or initiating a function by the driver with a touchscreen can be disadvantageous because the driver needs to direct his attention, in particular his view, away from the traffic to the touchscreen. In modern vehicles more and more functions can be controlled by a touchscreen and physical buttons are removed instead. However, activating a function through a touchscreen can require touching a certain position at the touchscreen. Modern touchscreens can provide additional functions at the same position dependent to the pressure of touching. However, the driver may need to identify the correct position visually in order to choose the function of interest, because the touchscreen may not comprise any buttons with a certain shape or surface structure which can be identified by haptic. Operating a function by a touchscreen during driving may be even more critical, if the driver needs to search in a menu for the function of interest, which requires additional time.

The document US 2013/261871 A1 discloses a method for initiating a function of a component of a vehicle comprising the steps:
- receiving a wirelessly transmitted data signal representing an input of a user to an object and/or the presence of the object inside the vehicle or its vicinity;
- comparing the data signal with previously recorded reference data;
- initiating the function of the component if the comparison results that the data signal is at least essentially identical to at least a subset of the previously recorded reference data;
- the data signal comprises object image data representing the object.

The document WO 2013/074866 A1 discloses systems that when taken alone, or together, provide an individual or group of individuals with an intuitive and comfortable vehicular environment. This includes a system to recognize the drivers and/or passengers within the automobile. Based on the recognition, the vehicle may change a configuration of the automobile to match predetermined preferences for the driver and/or passenger. The configurations may also include the recognition of a unique set of gestures for the person. Further, the configuration can also include the tracking of health data related to the person.

The document US 2012/283894 A1 discloses a safety control system for a vehicle with controls located on the vehicle steering wheel. The controls may be arranged in a cluster on one or both sides of the upper half of the steering wheel or on a special flange mounted to the steering wheel. The contours may be easily recognizable and accessible while driving without any distraction to the driver. The controls can be enhanced by varied coloring, shape, size, and texture to make them easily identifiable. The controls may be used with portable telematics devices, in a multi-modal process in conjunction with thumb gesture interpretation or speech recognition. A universal portable device docking station may be used in conjunction with the control system.

It is an object of the present invention to provide a method which enables an easier usability for initiating a function of the vehicle.

A solution to this problem is provided by the subject-matter of the independent claims. Various preferred embodiments of the present invention are provided by the subject-matter of the dependent claims.

A first aspect of the invention is directed to a method, according to the subject-matter of claim 1.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "one" as used herein are defined in the sense of "one or more". The terms "another" and "a further" and any other variant thereof are to be understood in the sense of "at least one more".

The term "plural" as used herein shall be understood in the sense of "two or more".

The term "configured" or "set up" to perform a certain function (and respective variations thereof) is to be understood in the sense of the invention as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

The term "initiating a function" as used herein shall be understood in the sense of initiating a current or available function of a vehicle, such as activating a certain seat heating or opening a tailgate, configuring an existing function which is then initiated, enabling or unlocking a new function which may include downloading a software for this new function, and/or providing new data (e.g. a movie, weather data, music, games, news, magazines or others). The term "initiating a function" as used herein shall be further understood in the sense of initiating a function of a connected device, such as a smartphone or a cloud-based system, in particular a cloud storage, or a server.

The term "object" as used herein shall be understood in the sense of any two-dimensional or three-dimensional physical structure, such as a sticker, a button, an item such as a bag, a toy, or a painted area or any other. Such an object can be arranged inside or outside a vehicle, it can be arranged loosely at the vehicle, or it can be attached to the vehicle by a velcro connection, a magnet connection, a screw connection or others. Such an object may also be an integrated part of a vehicle, such as a leather stitching of a seat or a frame of a display.

Accordingly, the method of the first aspect can enable the initiation of a component by receiving an input at an object. In this way the object can initiate a function, wherein the function is executed by the component. The position of the object may be different to the position of the component. Further, because the data signal representing an input of the user is transmitted wirelessly, such as an electromatic signal or acoustical signal, there may be several positions where the object may be placed and where it can receive the input of the user. Preferably the object can be positioned close to the user, whereas the component which executes the function may be placed at a different position which is further away. This results in more flexibility when the position of the object is arranged, and an easy usability of the function of the component for the user.

Further, the data signal comprises object image data representing the object; the method further comprises (i) comparing the object image data with previously recorded reference image data of the object, in particular comparing the object image data using an machine learning algorithm which has been pre-trained with the reference image data; (ii) initiating the function if the comparison results that the object image data is at least essentially identical to at least a subset of the previously recorded reference image data of the object. The object image data can be received by an in-vehicle camera or a combination of data of cameras for example a so-called "RGB" (red, green, blue) camera, infrared and/or a time-of-flight camera. In this way the function is initiated if the object is recognized. This enhances the reliability of the method and avoids accidental initiations of the function if the object is not recognized.

Further the object image data comprises an object identification-code, in particular a QR-code (Quick Response code), a barcode and/or a non-fungible token (NFT) for identifying the object; the method further comprises comparing the identification code with a previously recorded reference identification-code; initiating the function if the comparison results that the object identification-code is identical to the previously recorded reference identification-code. This can be advantageous, because an identification code can be recognized more reliable and with less computing effort compared to recognizing an object by analysing image data. Further, the identification code may also be used to register or to pair the object with the vehicle. This pairing can also trigger to download a machine learning algorithm to the vehicle from a cloud storage, wherein the machine learning algorithm has been trained with image reference data of the object.

In the following, certain preferred embodiments of the method will be described, which can be arbitrarily combined with each other or with other aspects of the present invention, unless such combination is explicitly excluded or technically impossible.

In some embodiments, the data signal comprises input image data representing a triggering gesture performed by the user. The triggering gesture can comprise any gesture leading to a mechanical deformation or moving a part of the object which relates to a triggering gesture, such as moving any part of a figure, squeezing a ball, a double press or a long press gesture. The triggering gesture can also comprise a swipe or any other gesture which relates to the object but does not have any mechanical impact to the object. The method further comprises (i) performing gesture recognition on the input image data by comparing the input image data with previously recorded data representing a reference triggering gesture; (ii) initiating the function if the comparison results that the represented triggering gesture by the input image data is at least essentially identical to the previously recorded data representing a reference triggering gesture. This enables the initiation of the function with a gesture which is related to the object. The gesture itself and the object do not require electrical or electronic connections between themselves to initiate the function. Only the gesture in relation to the object needs to be received for comparing with the reference data. Further the object does not need to be equipped with any means for transmitting or receiving signals. The object can be technically rather simple designed, and a physical body without any specific technical function can be sufficient. This enables an easy use without requiring particular technical skills of the user. This further enables a freer placement of the object, because there is not a power supply for the object required.

In some embodiments, performing a triggering gesture comprises performing a pointing gesture directed at the object. A pointing gesture directed at the object comprises a specific type of gesture, which can lead to a more reliable recognition of the gesture and initiation of the function. Accidental initiations of the function can be avoided.

In some embodiments, the method further comprises (i) determining a relative position of the performed gesture to a receiver by using the data signal which has been received by the receiver; (ii) comparing the determined relative position with a previously recorded reference relative position; (iii) initiating the function if the determined relative position is at least essentially identical to the previously recorded reference relative position. This can be favourable in a situation with little light inside the car, for example when a tunnel is crossed, and the object might not be recorded by a standard video-camera, but a distance of a gesture directing to a position of the object by using for example a time-of-flight-camera can be detected. It may be also possible to combine received data by different camera types. The data of the time-of-flight camera can be combined with data of an internal camera of the vehicle which is otherwise regularly used for driver assistance functions. Further, cameras for a specific wavelength range, such as infrared cameras can be used. This can be advantageous, if the object comprises materials which can be detected with a higher sensitivity by an infrared camera.

In some embodiments, the method further comprises illuminating the object if the comparison of the object image data to the previously recorded reference image data of the object results that the object image data is less than essential identical to a subset of the previously recorded reference image data of the object. This can be advantageous if the object has not been recognized as being essential identical previously recorded reference image data, but with a smaller degree of overlap. Illumination of the object can support to receive additional object image data to increase the degree of overlap of the compared data so that the comparison can result that the object image data is essential identical to a subset of the previously recorded reference image data of the object. Because the object image data have been received by a receiver, a determination of a relative position of this receiver to the object can be determined which can be used to direct the illumination to the object.

In some embodiments, the wirelessly transmitted data signal is transmitted by a transmitter unit such as a near field communication (NFC) unit, which is arranged at the object or integrated in the object. In this way a predefined signal can be actively sent from the transmitter unit, wherein its analysis requires less computing effort compared to an analysis of image data. It is also possible that the identification code is transmitted by the NFC unit. This can be advantageous in a situation where the object is identified when it enters the vehicle, and the object / NFC unit can be paired with a communication unit in the car.

In some embodiments, the method further comprises: (i) determining if a machine learning algorithm which is based on reference image data of the object is stored on a local storage in the vehicle; (ii) if the determination results that the local storage does not comprise the machine learning algorithm, determining if the machine learning algorithm which is based on reference image data of the object is stored on a cloud storage; (iii) downloading the machine learning algorithm to the local storage if the determination results that the cloud storage comprises the machine learning algorithm; (iv) applying the machine learning algorithm for comparing the object image data with previously recorded reference image data of the object. Applying a machine learning algorithm for comparing the object image data with the reference image data is advantageous, because the machine learning algorithm is based on the reference image data, which means the machine learning algorithm has been pre-trained with the reference image data. This can lead to a reliable result of the comparison. It can be advantageous that when the object is placed in the vehicle it is automatically determined if there is a machine learning algorithm stored locally which is based on the reference image data of the object and if this is not the case that such a machine learning algorithm is downloaded automatically from a cloud storage.

In some embodiments, the data signal, in particular comprising object image data and/or input image data, is received by a camera, in particular an in-vehicle camera. This can be advantageous because a camera can have in-built processing equipment and image processing procedures for providing data in a format which can be directly analysed, without pre-processing the data.

In some embodiments receiving the data signal comprises receiving an acoustical signal, which has been sent by the object, and which has been initiated by the input of the user. This can be advantageous, because comparing the data which comprises the acoustical signal with the previously recorded data can require less effort and the result can be more reliably compared to a gesture recognition due to less complexity of the signal. Further in case the object is arranged out of a region of a view of a camera, the object may not be seen by a camera, but a microphone can still receive the acoustical signal of the object. Such a situation can occur when the object is arranged outside the vehicle.

In some embodiments the received acoustical signal comprises a sound which has been produced by a mechanical deformation of the object. In this way, the object does not require electronic components to produce and send an acoustical signal. Preferably, different mechanical deformations at the object produce different sounds. This enables the initiation of different functions by mechanical deformation with one object. These different sounds can be also pre-trained and can be used in a machine learning algorithm.

In some embodiments, the received acoustical signal comprises a sound which has been produced by an acoustical unit which is integrated into the object, wherein the object comprises a sensor, and wherein the acoustical signal is sent if the sensor detects a predetermined signal. The sensor can in particular comprise a microphone, a motion sensor or another type of sensor. The object can further comprise an integrated battery for supplying energy to the sensor and the acoustical unit. If the object comprises a motion sensor, the object can emit an acoustical signal if it is moved. This movement can occur within the vehicle or when the object is brought into the vehicle. This acoustical signal can be detected by a microphone in the vehicle. The detection of the acoustical signal can be used for a pairing routine of the object with the vehicle or for initiating a function of the component of the vehicle. This can be also favourable if the object remained in the vehicle, while the vehicle has not been used for a long time, and a motion within the vehicle can be detected by the motion sensor of the object, for example a person entering the vehicle. By receiving the acoustical signal, a pairing routine or the initiation of a function can occur by the object, even if the vehicle has not been used for a long time.

In some embodiments the received acoustical signal comprises a frequency which is greater than 20kHz. It is well known that frequencies above 20kHz, which are also known as ultrasonic frequencies, are outside the human hearing range. Using these frequencies for an acoustical signal of the object can be favourable to ensure that the user or any passenger in the vehicle cannot hear the acoustic signal of the object, but a receiver, such as a microphone, can detect the acoustical signal. This can avoid distractions of the driver while driving the car. Preferably ambient noise or other sound signals which are transmitted at the same time as the acoustical signal are considered, in particular by subtracting them from a detected signal of microphone. This enables a more reliable identification of the acoustical signal, which has been sent by the object.

In some embodiments the initiated function comprises at least one of the group activating a certain seat heating, adjusting a position, in particular tighten bolsters, opening tailgate, adjusting a light, playing a certain piece of music, adjusting engine sound, playing a certain movie at certain display, online payment, opening or closing a certain window.

In some embodiments, the function is initiated if a predetermined criterion is fulfilled. This enables an additional verification if the function should be initiated. In this way accidental initiations of functions can be reduced or avoided. The criterion may comprise a locational requirement such that object is at least close to a location where the function is initiated. Such a situation may occur if the object can initiate a seat heating of a particular seat. If the object is located at a different seat, this could mean that the user who wants the seat heating to be activated is located at this different seat. In this case the seat heating would not be activated. In another case the seat heating could then affect another seat to which the object is now closer, after the object has been moved. An activated function may even be stopped in case the location of the object changes. The object may comprise a personalized information which relates the function to the user, and the criterion comprises that the function is initiated if the user is recognized. The user can be recognized in particular regarding occupying a specific seat in the vehicle, so that if the object can also be referred to this seat the function can be initiated, or by other known methods such as face detection or using a user's (driver's) key information. If it is confirmed that the user occupies a specific seat, that seat heating can be activated by an initiation of the object. In this situation it may not be required that the object is placed at a certain location. The personalized information can comprise an identity code, or a specific marker at the object which can be recognized by analysing the received image data of the object, or the personalized information is associated via a cloud-based information related to the object. The relationship can also be established dependent on the particular user who brings the object into the car. This enables to relate the object and the related function to a specific user. The criterion can comprise that a function is initiated only if the object is used by the specific user. The criterion further can comprise that dependent on which user the object is using, or applying a triggering gesture, a function related to the respective user is initiated, so that for different users different functions can be initiated with the same object. The criterion may also comprise that a function of the object can only be initiated if the user is recognized in the vehicle. The criterion can further comprise that a user which are located at certain seats cannot initiate predetermined functions. This can be beneficial to avoid the children are initiating certain functions. Children may be recognized by the location of the seat, so that if the location of the object is close or in the vicinity of such a seat the initiation of certain functions can be blocked. The criterion may also comprise that those functions can only be initiated if the location of the object is close or in the vicinity of the driver seat. In this way it can be ensured that certain functions can only be initiated by the driver. The criterion may comprise a verification if the function to be initiated is available in the vehicle. In case the function is not available a comparable function can be initiated. This can be the case if the function to be initiated is activating a seat heating. In case the current vehicle does not comprise a seat heating a comparable function can be the general heating of the vehicle which can instead be activated. The criterion can further comprise that the initiation of a function of an object is dependent on the presence of other objects in the vehicle.

In some embodiments, the method further comprises storing configurations regarding the object in a vehicle in a cloud storage. In this way the object and its related configurations can be used in another vehicle, which can download these configurations.

In some embodiments the object is preconfigured before it is used in a vehicle, such that it is related to a certain function, such as initiation to play a certain video. This could be done using an online account or a certain app. The configuration can then be transmitted to the car, for example when the object is detected by the car when the user brings it into the car.

A second aspect of the invention is directed to an apparatus for a vehicle for initiating a function of a component of the vehicle comprising (i) a receiver for receiving a wirelessly transmitted data signal representing an input of a user to an object and/or the presence of the object inside the vehicle or its vicinity; and (ii) an evaluation unit which is configured to compare the received data signal with previously recorded reference data; and the evaluation unit is further configured to initiate the function of the component if the comparison results that the data signal is at least essentially identical to at least a subset of the previously recorded reference data; wherein the data signal comprises object image data representing the object and wherein the object image data comprises an object identification-code for identifying the object; wherein the evaluation unit is further configured to: comparing the object image data with previously recorded reference image data of the object; initiating the function if the comparison results that the object image data is at least essentially identical to at least a subset of the previously recorded refer-ence image data of the object; comparing the identification code with a previously recorded reference identification-code; and initiating the function if the comparison results that the object identification-code is identical to the previously recorded reference identification-code.

In some embodiments the invention is directed to an apparatus for initiating a function of a component of a vehicle, the apparatus being configured to perform the method of the first aspect of the present invention.

A third aspect of the present invention is directed to a computer program or non-transitory computer-readable storage medium comprising instructions that, when executed on a computer or multi-computer platform, cause the computer or multi-computer platform, respectively, to perform the method of the first aspect of the present invention.

The computer or computer-readable storage medium may in particular be implemented in the form of a data carrier on which one or more programs for performing the method are stored. Preferably, this is a data carrier, such as a CD, a DVD or a flash memory module. This may be advantageous, if the computer program product is meant to be traded as an individual product independent from the computer platform on which the one or more programs are to be executed. In another implementation, the computer program is provided as a file on a data processing unit, in particular on a server, and can be downloaded via a data connection, e.g. the Internet or a dedicated data connection, such as a proprietary or local area network.

The various embodiments and advantages described above in connection with the first aspect of the present invention similarly apply to the other aspects of the invention. Further advantages, features and applications of the present invention are provided in the following detailed description and the appended figures, wherein:
**Fig. 1** schematically illustrates a flowchart illustrating an exemplary method for initiating a function of a component of a vehicle;
**Fig. 2** schematically illustrates an apparatus for initiating a function of a component of the vehicle.

In the figures, identical reference signs are used for the same or mutually corresponding elements of the invention described herein.

### DETAILED DESCRIPTION OF EMBODIMENTS

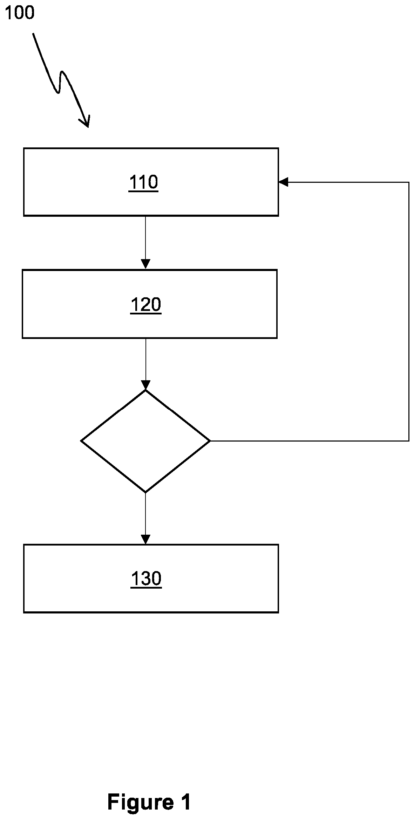

**Figure 1** schematically illustrates a flowchart illustrating an exemplary method 100 for initiating a function of a component 210 of a vehicle 200.

In a first step 110 of the method comprises receiving a wirelessly transmitted data signal representing an input of a user to an object 250 and/or the presence of the object 250 inside the vehicle 200 or its vicinity. The data can be transmitted as electromagnetic signal and the transmitted data can comprise object image data representing the object. The object image data can be received and recorded by a camera.

In a further step 120 of the method 100 the object image data are compared with previously recorded reference image data of the object.

In a further step 130 of the method the function of the component 210 is initiated if the comparison results that the object image data is at least essentially identical to a least a subset of the previously recorded reference image data of the object 250. The initiated function can be activating a seat heating, opening tailgate, playing a certain piece of music, playing a certain movie at certain display, opening or closing a certain window or any other function of the vehicle 200 which can be executed by the component 210.

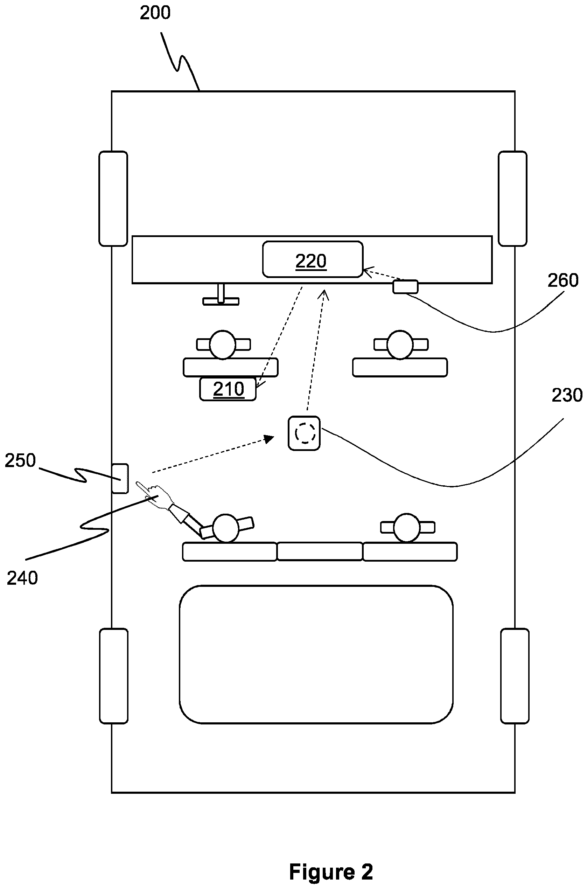

**Figure 2** schematically illustrates an apparatus for initiating a function of a component 210 of a vehicle 200. The component 210 of the vehicle 200 can be any component, which can execute a function. For example, the component 210 can be a window controller. The component 210 can comprise a radio, a multi-media device with a display facing the rear seats of the vehicle, a reading light inside the car, a seat heating or others. According to the invention the function of the component 210 can be initiated by an input of a user 240 to an object 250. Thereby, the object 250 is assigned to a particular function. And another object can be assigned to a different function. In this way by assigning functions to individual objects, each function can be initiated by a particular object.

One alternative of this embodiment comprises that the input of the user can comprise a gesture 240 which can be recorded by a camera 230, in particular a car internal camera, for producing object image data which are analysed by an evaluation unit 220, performing gesture recognition, to recognize the gesture in combination with the object 250. It is also possible to use a car external camera, such as a camera for rear-view or a side camera. Thereby, the cameras which are already provided by the car, without requiring arranging further cameras in the car, are preferably used. It is also possible to use a camera of a smartphone of the user. Further, object image data of the object 250 are recorded by the camera 230. To recognize the object 250 object image reference data of the object are recorded before the object image data are recorded. Such recording of reference object image data is also known as training or pre-learning of the object 250. These pre-learned data of the object 250 can be used by a machine-learning algorithm. The "pre-training" can comprise the interior of the vehicle, for example to accommodate different "backgrounds" like different colours or patterns of used fabrics or materials in interior of the vehicle 200. It is possible that training data of the object 250 are provided by the manufacturer of the vehicle for certain objects. It is also possible that the user of the car initiates a training of own objects 250 for initiating a certain function of a component of the vehicle 200. It is further possible that a third party which is providing the objects provides also training data for the object 250. Once the object image data are recorded these are compared with the object image reference data by the evaluation unit 220. Further gestures 240 of the user are recorded by the camera 230 and analysed by performing gesture recognition by the evaluation unit 220. The function of the component 210 is initiated if the comparisons results that the object image data is at least essentially identical to at least a subset of the previously recorded reference image data of the object 250, and if the gesture 240 is recognizes as a triggering gesture, such as a double tab or long press gesture. Also, other gestures are possible. For example, if the object 250 comprises a figure of a person, the gesture 240 can be turning the head of the figure.

In case that the object 250 is recorded by the camera 230 the object 250 does not require any particular structural features. In particular the object 250 does not require any electrical components to initiate the function. In general, the object 250 can be any physical item, such as a toy, a bag or a touchable surface area in the car.

Another alternative of this embodiment comprises that the input 240 of the user initiates an acoustical signal at the object 250, such that the object 250 emits the acoustical signal. This acoustical signal can be initiated by a mechanical impact of the user to the object 250, such that for example a click-sound is emitted. If several objects are used in the same vehicle the objects can be configured such that each single object emits a different sound compared to the other objects 250. The object 250 also can comprise a battery, an acoustical emitter, and a button to activate the acoustical emitter (not shown), such that when the user presses the button of the object 250 the acoustical emitter emits a particular sound. The sound can be of a high frequency, in particular greater than 20kHz, such that it is not perceptible to the human ear, but microphones in the car can detect it. It is also possible that the object 250 comprises an audio unit (not shown) such that the object can emit a set of acoustic signals, such as a certain melody or sound as a consequence of the input 240 of the user.

The acoustical signal can be received by a microphone 260 of the vehicle 200, in particular a microphone which is already part of the vehicle 200, so that there is no need to install an additional microphone. It is also possible to use a microphone 260 of a smartphone of the user or a passenger of the car to record the acoustical signal. The smartphone then can transmit a signal to the component 210, or a control unit (not shown) which is signal connected to the component 210, to initiate the function.

It is also possible to combine the two alternatives. It can be also possible that the object 250 can interact with a multimedia content, in particular with by a virtual reality application, and the interaction can initiate a function. For example, if during a movie an interior of a vehicle is shown, the user may direct the object, which is then embedded in the movie, to the button which can open a window, which leads to the opening of a window in the current real vehicle.

In **Figure 2** the object 250 is placed at a panel of a door next to a passenger sitting on a left rear seat. However, there are further options where the object 250 can be positioned and how it is attached. For example, the object 250 can be placed at the back of the front seats facing a passenger at a rear seat, at a panel on a vehicle door, at a dashboard and/or at roof area of the vehicle. The object 250 can be attached to a part of the vehicle via velcro fastener or via a magnetic connection. The object 250 can comprise a magnet to magnetically attach it. It is further possible that the object 250 is not attached to the vehicle, but it is loosely arranged in the car, so that any user can grab it and initiate the function. It is further possible that the object 250 is placed outside the vehicle 200. In this case a recording of an acoustical signal is possible. For example, the object 250 can be attached to a rear bumper at the vehicle 200, and if one pushes the object 250 a sound emerges which initiates the function that a tailgate of the vehicle 200 opens.

While above at least one exemplary embodiment of the present invention has been de-scribed, it has to be noted that a great number of variations thereto exists. Furthermore, it is appreciated that the described exemplary embodiments only illustrate nonlimiting examples of how the present invention can be implemented and that it is not intended to limit the scope, the application or the configuration of the herein-described apparatus' and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims.

### LIST OF REFERENCE SIGNS

- 100: Flowchart illustrating an exemplary method for initiating a function of a component of a vehicle.
- 110: Receiving a wirelessly transmitted data signal
- 120: Comparing the data signal with previously recorded data
- 130: Initiating the function of the component

- 200: Vehicle
- 210: Component
- 220: Evaluation unit
- 230: Camera
- 240: Gesture of user
- 250: Object
- 260: Microphone

## Claims

1. A Method (100) for initiating a function of a component (210) of a vehicle (200) comprising the steps:
receiving (110) a wirelessly transmitted data signal representing an input of a user to an object (250) and/or the presence of the object inside the vehicle or its vicinity;
comparing (120) the data signal with previously recorded reference data;
initiating the function of the component (210) if the comparison results that the data signal is at least essentially identical to at least a subset of the previously recorded reference data;
wherein the data signal comprises object image data representing the object (250) and wherein the object image data comprises an object identification-code for identifying the object;
wherein the method further comprises the steps:
comparing the object image data with previously recorded reference image data of the object (250);
initiating the function if the comparison results that the object image data is at least essentially identical to at least a subset of the previously recorded reference image data of the object;
comparing the identification code with a previously recorded reference identification-code; and
initiating the function if the comparison results that the object identification-code is identical to the previously recorded reference identification-code.

2. The Method (100) of claim 1, wherein the data signal comprises input image data representing a triggering gesture performed by the user;
the method further comprises
performing gesture recognition on the input image data by comparing the input image data with previously recorded data representing a reference triggering gesture;
initiating the function if the comparison results that the represented triggering gesture by the input image data is at least essentially identical to the previously recorded data representing a reference triggering gesture.

3. The Method (100) of claim 2, wherein performing a triggering gesture comprises performing a pointing gesture directed at the object (250).

4. The Method (100) of any of the claims 1 to 3, the method further comprises determining a relative position of the performed gesture to a receiver by using the data signal which has been received by the receiver (230);
comparing the determined relative position with a previously recorded reference relative position;
initiating the function if the determined relative position is at least essentially identical to the previously recorded reference relative position.

5. The Method (100) of any of the claims 1 to 4, the method further comprises illuminating the object if the comparison of the object image data to the previously recorded reference image data of the object results that the object image data is less than essential identical to a subset of the previously recorded reference image data of the object.

6. Method (100) of any of the claims 1 to 5, the method further comprises determining if a machine learning algorithm which is based on reference image data of the object is stored on a local storage in the vehicle (200);
if the determination results that the local storage does not comprise the machine learning algorithm, determining if the machine learning algorithm which is based on reference image data of the object is stored on a cloud storage; downloading the machine learning algorithm to the local storage if the determination results that the cloud storage comprises the machine learning algorithm;
applying the machine learning algorithm for comparing the object image data with previously recorded reference image data of the object (250).

7. The Method (100) of any of claims 1 to 6, wherein the data signal is received by a camera (230).

8. Method (100) of any of the preceding claims, wherein receiving the data signal comprises receiving an acoustical signal, which has been sent by the object (250), and which has been initiated by the input of the user.

9. Method (100) of claim 8, wherein the received acoustical signal comprises a sound which has been produced by a mechanical deformation of the object (250).

10. Method (100) of any of the preceding claims, wherein the function is initiated if a predetermined criterion is fulfilled.

11. Apparatus for a vehicle (200) for initiating a function of a component (210) of the vehicle (200) comprising
a receiver (230) for receiving a wirelessly transmitted data signal representing an input of a user (240) to an object (250) and/or the presence of the object inside the vehicle or its vicinity;
an evaluation unit (220) which is configured to compare the received data signal with previously recorded reference data; and the evaluation unit (220) is further configured to initiate the function of the component (210) if the comparison results that the data signal is at least essentially identical to at least a subset of the previously recorded reference data,
wherein the data signal comprises object image data representing the object (250) and wherein the object image data comprises an object identification-code for identifying the object;
wherein the evaluation unit (220) is further configured to:
comparing the object image data with previously recorded reference image data of the object (250);
initiating the function if the comparison results that the object image data is at least essentially identical to at least a subset of the previously recorded reference image data of the object;
comparing the identification code with a previously recorded reference identification-code; and
initiating the function if the comparison results that the object identification-code is identical to the previously recorded reference identification-code.

12. Apparatus for a vehicle (200), for initiating a function of a component (210) of the vehicle (200), the apparatus being configured to perform the method (100) of any of the claims 1 to 10.

13. Computer program comprising instructions that, when executed on a computer, cause the computer to perform the method (100) of any one of the claims 1 to 10.

## Patentansprüche

1. Verfahren (100) zum Initiieren einer Funktion einer Komponente (210) eines Fahrzeugs (200), das die folgenden Schritte umfasst:
Empfangen (110) eines drahtlos übertragenen Datensignals, das eine Eingabe eines Benutzers in ein Objekt (250) und/oder die Anwesenheit des Objekts innerhalb des Fahrzeugs oder seiner Umgebung repräsentiert;
Vergleichen (120) des Datensignals mit zuvor aufgezeichneten Referenzdaten;
Initiieren der Funktion der Komponente (210), wenn der Vergleich ergibt, dass das Datensignal zumindest im Wesentlichen identisch mit zumindest einer Teilmenge der zuvor aufgezeichneten Referenzdaten ist;
wobei das Datensignal Objektbilddaten umfasst, die das Objekt (250) repräsentieren, und wobei die Objektbilddaten einen Objektidentifikationscode zum Identifizieren des Objekts umfassen;
wobei das Verfahren ferner die folgenden Schritte umfasst:
Vergleichen der Objektbilddaten mit zuvor aufgezeichneten Referenzbilddaten des Objekts (250);
Initiieren der Funktion, wenn der Vergleich ergibt, dass die Objektbilddaten zumindest im Wesentlichen identisch mit zumindest einer Teilmenge der zuvor aufgezeichneten Referenzbilddaten des Objekts sind;
Vergleichen des Identifikationscodes mit einem zuvor aufgezeichneten Referenzidentifikationscode; und Initiieren der Funktion, wenn der Vergleich ergibt, dass der Objektidentifikationscode mit dem zuvor aufgezeichneten Referenzidentifikationscode identisch ist.

2. Verfahren (100) nach Anspruch 1, wobei das Datensignal Eingabebilddaten umfasst, die eine Auslösegeste repräsentieren, die durch den Benutzer durchgeführt wird;
wobei das Verfahren ferner Folgendes umfasst:
Durchführen einer Gestenerkennung an den Eingabebilddaten durch Vergleichen der Eingabebilddaten mit zuvor aufgezeichneten Daten, die eine Referenzauslösegeste repräsentieren;
Initiieren der Funktion, wenn der Vergleich ergibt, dass die dargestellte Auslösegeste durch die Eingabebilddaten zumindest im Wesentlichen identisch mit den zuvor aufgezeichneten Daten ist, die eine Referenzauslösegeste repräsentieren.

3. Verfahren (100) nach Anspruch 2, wobei das Durchführen einer Auslösegeste das Durchführen einer auf das Objekt (250) gerichteten Zeigegeste umfasst.

4. Verfahren (100) nach einem der Ansprüche 1 bis 3, wobei das Verfahren ferner das Bestimmen einer relativen Position der durchgeführten Geste zu einem Empfänger unter Verwendung des Datensignals, das durch den Empfänger (230) empfangen wurde, umfasst;
Vergleichen der bestimmten relativen Position mit einer zuvor aufgezeichneten relativen Referenzposition; Initiieren der Funktion, wenn die ermittelte relative Position zumindest im Wesentlichen mit der zuvor aufgezeichneten relativen Referenzposition identisch ist.

5. Verfahren (100) nach einem der Ansprüche 1 bis 4, wobei das Verfahren ferner das Beleuchten des Objekts umfasst, wenn der Vergleich der Objektbilddaten mit den zuvor aufgezeichneten Referenzbilddaten des Objekts ergibt, dass die Objektbilddaten weniger als im Wesentlichen identisch mit einer Teilmenge der zuvor aufgezeichneten Referenzbilddaten des Objekts sind.

6. Verfahren (100) nach einem der Ansprüche 1 bis 5, wobei das Verfahren ferner das Bestimmen umfasst, ob ein Maschinenlernalgorithmus, der auf Referenzbilddaten des Objekts basiert, in einem lokalen Speicher in dem Fahrzeug gespeichert ist (200);
wenn die Bestimmung ergibt, dass der lokale Speicher den Maschinenlernalgorithmus nicht umfasst, Bestimmen, ob der Maschinenlernalgorithmus, der auf Referenzbilddaten des Objekts basiert, in einem Cloud-Speicher gespeichert ist; Herunterladen des Maschinenlernalgorithmus in den lokalen Speicher, wenn die Bestimmung ergibt, dass der Cloud-Speicher den Maschinenlernalgorithmus umfasst; Anwenden des Maschinenlernalgorithmus zum Vergleichen der Objektbilddaten mit zuvor aufgezeichneten Referenzbilddaten des Objekts (250).

7. Verfahren (100) nach einem der Ansprüche 1 bis 6, wobei das Datensignal durch eine Kamera (230) empfangen wird.

8. Verfahren (100) nach einem der vorhergehenden Ansprüche, wobei das Empfangen des Datensignals das Empfangen eines akustischen Signals umfasst, das durch das Objekt (250) gesendet wurde und das durch die Eingabe des Benutzers initiiert wurde.

9. Verfahren (100) nach Anspruch 8, wobei das empfangene akustische Signal ein Geräusch umfasst, das durch eine mechanische Verformung des Objekts (250) erzeugt wurde.

10. Verfahren (100) nach einem der vorhergehenden Ansprüche, wobei die Funktion initiiert wird, wenn ein vorbestimmtes Kriterium erfüllt ist.

11. Einrichtung für ein Fahrzeug (200) zum Initiieren einer Funktion einer Komponente (210) des Fahrzeugs (200), die Folgendes umfasst:
einen Empfänger (230) zum Empfangen eines drahtlos übertragenen Datensignals, das eine Eingabe eines Benutzers (240) an ein Objekt (250) und/oder die Anwesenheit des Objekts innerhalb des Fahrzeugs oder
seiner Umgebung repräsentiert;
eine Auswertungseinheit (220), die dazu ausgelegt ist, das empfangene Datensignal mit zuvor aufgezeichneten Referenzdaten zu vergleichen; und die Auswertungseinheit (220) ferner dazu ausgelegt ist, die Funktion der Komponente (210) zu initiieren, wenn der Vergleich ergibt, dass das Datensignal zumindest im Wesentlichen identisch mit zumindest einer Teilmenge der zuvor aufgezeichneten Referenzdaten ist,
wobei das Datensignal Objektbilddaten umfasst, die das Objekt (250) repräsentieren, und wobei die Objektbilddaten einen Objektidentifikationscode zum Identifizieren des Objekts umfassen;
wobei die Auswerteeinheit (220) ferner ausgelegt ist zum:
Vergleichen der Objektbilddaten mit zuvor aufgezeichneten Referenzbilddaten des Objekts (250);
Initiieren der Funktion, wenn der Vergleich ergibt, dass die Objektbilddaten zumindest im Wesentlichen identisch mit zumindest einer Teilmenge der zuvor aufgezeichneten Referenzbilddaten des Objekts sind;
Vergleichen des Identifikationscodes mit einem zuvor aufgezeichneten Referenzidentifikationscode; und
Initiieren der Funktion, wenn der Vergleich ergibt, dass der Objektidentifikationscode mit dem zuvor aufgezeichneten Referenzidentifikationscode identisch ist.

12. Einrichtung für ein Fahrzeug (200) zum Initiieren einer Funktion einer Komponente (210) des Fahrzeugs (200), wobei die Einrichtung dazu ausgelegt ist, das Verfahren (100) nach einem der Ansprüche 1 bis 10 durchzuführen.

13. Computerprogramm, das Anweisungen umfasst, die, wenn sie auf einem Computer ausgeführt werden, den Computer veranlassen, das Verfahren (100) nach einem der Ansprüche 1 bis 10 durchzuführen.

## Revendications

1. Procédé (100) destiné à initier une fonction d'un composant (210) d'un véhicule (200) comprenant les étapes suivantes :
la réception (110) d'un signal de données transmis sans fil représentant une entrée d'un utilisateur vers un objet (250) et/ou la présence de l'objet à l'intérieur du véhicule ou de son voisinage ;
la comparaison (120) du signal de données aux données de référence enregistrées précédemment ;
l'initiation de la fonction du composant (210) si les résultats de comparaison que le signal de données est au moins essentiellement identique à au moins un sous-ensemble des données de référence enregistrées précédemment ;
dans lequel le signal de données comprend des données d'image d'objet représentant l'objet (250) et dans lequel les données d'image d'objet comprennent un code d'identification d'objet pour identifier l'objet ;
dans lequel le procédé comprend en outre les étapes suivantes :
la comparaison des données d'image d'objet aux données d'image de référence enregistrées précédemment de l'objet (250) ;
l'initiation de la fonction si les résultats de comparaison que les données d'image d'objet sont au moins essentiellement identiques à au moins un sous-ensemble des données d'image de référence enregistrées précédemment de l'objet ;
la comparaison du code d'identification à un code d'identification de référence enregistré précédemment ; et
l'initiation de la fonction si les résultats de comparaison que le code d'identification d'objet est identique au code d'identification de référence enregistré précédemment.

2. Procédé (100) selon la revendication 1, dans lequel le signal de données comprend des données d'image d'entrée représentant un geste de déclenchement exécuté par l'utilisateur ;
le procédé comprend en outre
l'exécution d'une reconnaissance de geste sur les données d'image d'entrée en comparant les données d'image d'entrée aux données enregistrées précédemment représentant un geste de déclenchement de référence ; l'initiation de la fonction si les résultats de comparaison que le geste de déclenchement représenté par les données d'image d'entrée est au moins essentiellement identique aux données enregistrées précédemment représentant un geste de déclenchement de référence.

3. Procédé (100) selon la revendication 2, dans lequel l'exécution d'un geste de déclenchement comprend l'exécution d'un geste de pointage dirigé au niveau de l'objet (250).

4. Procédé (100) selon l'une quelconque des revendications 1 à 3, le procédé comprend en outre la détermination d'une position relative du geste effectué vers un récepteur en utilisant le signal de données qui a été reçu par le récepteur (230) ;
la comparaison de la position relative déterminée à une position relative de référence enregistrée précédemment ;
l'initiation de la fonction si la position relative déterminée est au moins essentiellement identique à la position relative de référence enregistrée précédemment.

5. Procédé (100) selon l'une quelconque des revendications 1 à 4, le procédé comprend en outre l'éclairage de l'objet si la comparaison des données d'image d'objet aux données d'image de référence enregistrées précédemment des résultats d'objet que les données d'image d'objet sont inférieures à celles essentielles identiques à un sous-ensemble des données d'image de référence enregistrées précédemment de l'objet.

6. Procédé (100) selon l'une quelconque des revendications 1 à 5, le procédé comprend en outre la détermination pour savoir si un algorithme d'apprentissage machine qui est basé sur des données d'image de référence de l'objet est stocké sur un stockage local dans le véhicule (200) ;
si les résultats de détermination sont que le stockage local ne comprend pas l'algorithme d'apprentissage machine, la détermination pour savoir si l'algorithme d'apprentissage machine qui est basé sur des données d'image de référence de l'objet est stocké sur un stockage en nuage ; le téléchargement de l'algorithme d'apprentissage machine sur le stockage local si les résultats de détermination sont que le stockage en nuage comprend l'algorithme d'apprentissage machine ; l'application de l'algorithme d'apprentissage machine pour comparer les données d'image d'objet aux données d'image de référence enregistrées précédemment de l'objet (250).

7. Procédé (100) selon l'une quelconque des revendications 1 à 6, dans lequel le signal de données est reçu par une caméra (230).

8. Procédé (100) selon l'une quelconque des revendications précédentes, dans lequel la réception du signal de données comprend la réception d'un signal acoustique, qui a été envoyé par l'objet (250), et qui a été initié par l'entrée de l'utilisateur.

9. Procédé (100) selon la revendication 8, dans lequel le signal acoustique reçu comprend un son qui a été produit par une déformation mécanique de l'objet (250).

10. Procédé (100) selon l'une quelconque des revendications précédentes, dans lequel la fonction est initiée si un critère prédéterminé est rempli.

11. Appareil pour un véhicule (200) destiné à initier une fonction d'un composant (210) du véhicule (200) comprenant
un récepteur (230) pour recevoir un signal de données transmis sans fil représentant une entrée d'un utilisateur (240) vers un objet (250) et/ou la présence de l'objet à l'intérieur du véhicule ou de son voisinage ;
une unité d'évaluation (220) qui est configurée pour comparer le signal de données reçu aux données de référence enregistrées précédemment ; et l'unité d'évaluation (220) est configurée en outre pour initier la fonction du composant (210) si les résultats de comparaison que le signal de données est au moins essentiellement identique à au moins un sous-ensemble des données de référence enregistrées précédemment,
dans lequel le signal de données comprend des données d'image d'objet représentant l'objet (250) et dans lequel les données d'image d'objet comprennent un code d'identification d'objet pour identifier l'objet ;
dans lequel l'unité d'évaluation (220) est configurée en outre pour :
la comparaison des données d'image d'objet aux données d'image de référence enregistrées précédemment de l'objet (250) ;
l'initiation de la fonction si les résultats de comparaison que les données d'image d'objet sont au moins essentiellement identiques à au moins un sous-ensemble des données d'image de référence enregistrées précédemment de l'objet ;
la comparaison du code d'identification à un code d'identification de référence enregistré précédemment ; et
l'initiation de la fonction si les résultats de comparaison que le code d'identification d'objet est identique au code d'identification de référence enregistré précédemment.

12. Appareil pour un véhicule (200), destiné à initier une fonction d'un composant (210) du véhicule (200), l'appareil étant configuré pour exécuter le procédé (100) selon l'une quelconque des revendications 1 à 10.

13. Programme informatique comprenant des instructions qui, lorsqu'elles sont exécutées sur un ordinateur, amènent l'ordinateur à exécuter le procédé (100) selon l'une quelconque des revendications 1 à 10.
